# EUROPEAN PATENT APPLICATION

(11) **EP 3 111 778 A1**
(43) Date of publication of application: **04.01.2017**
(21) Application number: 16173543.6
(22) Date of filing: 08.06.2016
(51) Int. Cl.: A23L 7/196

(54) **METHOD FOR COOKING RICE**

(30) Priority: 30.06.2015 IT UB20151861
(71) Applicant: Azienda Agricola Bertozzo Giacomo, 37063 Verona (IT)
(72) Inventor: BERTOZZO, Giacomo, I-37063 Verona (IT)
(74) Representative: Carangelo, Pierluigi

(57) **Abstract**

This invention relates to a method of cooking rice for the preparation of a partially cooked rice that requires short times for the completion of cooking by an end user. This method is especially dedicated to use by the large-scale catering, such as cafeterias or similar. In particular, this invention relates to a method for partially cooking rice that provides for the following operating steps:
a) toasting the rice in a fat and salt;
b) boiling the toasted rice in a quantity of boiling water between 1200 and 1500 ml, preferably about 1400 ml per kg of rice and for a boiling time of about 8 minutes;
c) cooling the rice to room temperature for a first cooling time and in a blast chiller for a second cooling time;
d) optionally, pasteurising the partially cooked rice thus obtained.

## Description

### Field of the technique of the invention

This invention relates to a method of cooking rice for the preparation of a partially cooked rice that requires short times for the completion of cooking by an end user. This method is especially dedicated to use by the large-scale catering, such as cafeterias or similar.

### State of the art

Adaptation to current needs, both domestic and professional, requires limited food cooking times, especially for the preparation of those dishes that traditionally require a constant attention and thus the continuous presence of the operator. This is especially true in large distribution, i.e., in the preparation of meals in cafeterias, dining halls and the like, where limited times are combined with the problems associated with large quantities of food being prepared.

The preparation of rices and risottos in particular is one of those operations that require constant care and attention in order to obtain a dish that meets the desired qualitative characteristics. A risotto normally takes 15-18 minutes of cooking time for the rice, to which must be added the time needed for preliminary operations, such as the preparation of the sautéed mixture and toasting of the rice. For a risotto to acquire the desired organoleptic characteristics, it is necessary to add the cooking liquid, usually broth, a little at a time and the operator is required to stir the rice being cooked, if not continuously, at least with a certain regularity, to prevent the rice sticking on the bottom of the pan and to mix the various components. This lengthy procedure certainly does not meet the needs of medium to large-scale preparation such as in cafeterias.

There is therefore the need to develop methods of pre-cooking rice that allow obtaining of a rice that can be completely cooked in relatively short times.

A traditional method, especially used in Asian cuisine, is the preparation of so-called rice "pilaf". This method provides for cooking the rice in the oven with a predetermined quantity of water or broth, until the cooking liquid is completely absorbed. The rice thus obtained is pre-cooked and can be used as such, preserved for several days, but is not suitable for the preparation of risottos according to classic Western techniques. In fact, rice pilaf is normally used as a side dish to meat or fish, with the possible addition of sauces, but without further manipulation.

Another method known and usable in household preparations, involves washing the rice with running water or keeping it in water for a certain period of time, so as to eliminate most of the starch. In this way, the rice can be cooked in 7 to 8 minutes, and can also be used in the preparation of risottos, but the result obtained is not optimal in terms of the creaminess and texture of the risotto.

There is an industrial process in which "parboiled" rice is prepared, which includes the pre-cooking the rice with steam. However, in this case as well, the rice obtained is not suitable for the preparation of good quality risottos.

For this reason, there is the need to make available a process for the partial cooking of the rice that permits a substantial shortening of the final cooking times, while maintaining high quality standards for the dish that is finally obtained.

### Summary of the invention

This invention therefore relates to a method for partially cooking rice as outlined in the accompanying claims.

Further characteristics and advantages of the process according to the invention will be evident from the following description of examples of preferred embodiments, provided in an indicative and non-limiting way.

### Detailed description of the invention

This invention relates to a method of partially cooking rice that provides for the following operating steps:
a) toasting the rice in a fat and salt;
b) boiling the toasted rice in a quantity of boiling water between 1200 and 1500 ml per kg of rice and for a boiling time of about 8 minutes;
c) cooling the rice at room temperature for a first cooling time and in a blast chiller for a second cooling time;
d) optionally, pasteurising the partially cooked rice thus obtained.

The rice usable in the method of the invention can be any variety of rice, with preference for the typical varieties used in the preparation of risottos, such as Vialone Nano, Carnaroli, Arborio or Europa. Vialone Nano is particularly preferred.

### Step a) toasting

The toasting phase is carried out in a fat, preferably vegetable. More preferably, olive oil or extra-virgin olive oil is used.

The amount of fat used is preferably between 10 and 40 g, more preferably about 30 g per kg of rice.

The salt may be coarse salt or fine salt. The amount of salt used is preferably between 3 and 10 g, more preferably about 5 g per kg of rice.

The toasting phase is carried out in a conventional manner, until the rice grains assume an almost transparent appearance with some parts blackened and the temperature of the mass of rice is increased to about 70 °C.

### Step b) boiling

The boiling phase is carried out by pouring the expected amount of boiling water on the toasted rice. Preferably, a quantity of about 1400 ml of boiling water per kg of rice will be used. The boiling water used in this invention normally has a temperature between 96 °C and 99 °C. At the end of the boiling step, the water will be completely or almost completely absorbed.

Preferably, the boiling step is carried out for a first boiling time of about 4 minutes, followed by stirring the rice and the continuation of boiling and stirring of the rice for a second boiling time of about 4 minutes. The temperature of the cooking mass is about 100 °C during the first boiling time and decreases from about 100 °C to about 95-96 °C during the second boiling time, following the evaporation/absorption of the cooking water.

### Step c) cooling

At the end of boiling step b), the mass of partially cooked rice is subjected to a first cooling to ambient temperature, preferably for a time of about 1 minute or until reaching a temperature between 75 °C and 80 °C, more preferably of about 77 °C. The cooling to ambient temperature is preferably carried out by pouring the cooking mass in a container with a bottom surface area greater than the bottom of the boiling container, in such a way that the mass of rice can spread and evaporate and reach the desired temperature in the shortest possible time.

The second cooling of the mass of partially cooked rice is preferably carried out in a reduction chamber set at a temperature between -17 °C and -20 °C.

The second cooling time is preferably about 9 minutes, so as to bring the mass of rice up to ambient temperature.

Preferably, after 4-5 minutes of cooling, the rice mass is stirred to prevent an excessive packing.

### Step d) pasteurisation

The partially cooked rice can be pasteurised according to conventional methods, operating at a temperature of about 75 °C for a time between 10 and 30 seconds.

The partially cooked rice obtained by the method of this invention can be packaged under vacuum according to conventional techniques and stored in a refrigerated atmosphere (about 4 °C) for about 30 days or more.

Another object of the invention is a final cooking method of the partially cooked rice of the invention for making risottos or rice for salads or other uses, which provides for cooking the partially cooked rice in a cooking liquid, in a weight ratio of 1:1 with respect to the weight of rice, for a time between 2 and 4 minutes, preferably about 3 minutes. In a preferred embodiment, the final cooking of the rice is performed with induction systems.

### EXAMPLE 1 - PREPARATION OF A RISOTTO

The following recipe is applied for the preparation of a large portion of risotto using 150 g of the partially cooked rice of the invention.

In a steel saucepan with a double bottom, heat a sauce as desired on a flame or induction plate in a quantity not exceeding half of the rice portion. The sauce should not contain an amount greater than 50 g of cooking liquid.

When the sauce is hot, still under lively heating, add all the rice and, when the temperature has stabilised, stir vigorously. When the liquid is absorbed, add water in an amount such that the total portion of cooking liquid is in the ratio of 1:1 with respect to the rice (150 ml total cooking liquid per 150 g of rice).

After 2 min and 30 sec, remove from heat and stir for 30 seconds stirring at will with butter or oil and Parmesan cheese, possibly adjusting with salt.

### EXAMPLE 2 - PREPARATION OF A RICE SALAD

Heat 150 g of water on an induction plate at maximum power, then pour in 150 g of rice and reduce the power of the induction hot plate from maximum to medium. Cook for 2 and a half minutes (total water absorption), then pour into a baking dish or on a surface, let cool and season to taste.

The method of the invention thus allows achieving the intended purposes, making available a partially cooked rice that can be brought to final cooking in a time not exceeding 4 minutes and generally between 2 and 3 minutes, providing a risotto that meets the desired organoleptic characteristics and which is substantially indistinguishable from risotto prepared according to conventional techniques.

The partially cooked rice of the invention can also be stored for several days, as required by the needs of large-scale catering.

It is obvious that only some particular embodiments of the present invention have been described, to which an expert in the art will be able to make any necessary modifications for its adaptation to particular applications without, however, departing from the scope of protection of this invention.

## Claims

1. A method for partially cooking rice which provides for the following operating steps:
a) toasting the rice in a fat and salt;
b) boiling the toasted rice in a quantity of boiling water between 1200 and 1500 ml, preferably about 1400 ml per kg of rice and for a boiling time of about 8 minutes;
c) cooling the rice at room temperature for a first cooling time and in a blast chiller for a second cooling time;
d) optionally, pasteurising the partially cooked rice thus obtained.

2. Method according to claim 1, in which the rice is chosen from Vialone Nano, Carnaroli, Arborio and Europa.

3. Method according to claim 1 or 2, in which the fat in the toasting step a) is a vegetable fat, preferably olive oil or extra-virgin olive oil.

4. Method according to any of the claims from 1 to 3, wherein the amount of fat used is between 10 and 40 g, preferably about 30 g per kg of rice.

5. Method according to any of the claims from 1 to 4, wherein the salt is coarse salt or fine salt and wherein the amount of salt used is between 3 and 10 g, preferably about 5 g per kg of rice.

6. Method according to any of the claims from 1 to 5, wherein the temperature of the mass of rice during the toasting step a) is up to approximately 70 °C.

7. Method according to any of the claims from 1 to 6, wherein the boiling step b) is conducted by pouring boiling water at a temperature between 96 °C and 99 °C onto the toasted rice.

8. Method according to any one of the claims from 1 to 7, wherein the boiling step b) is conducted for a first boiling time of about 4 minutes, followed by mixing of the rice and by continuation of the boiling and stirring of the rice for a second boiling time of about 4 minutes.

9. Method according to claim 8, wherein the temperature of the cooking mass is about 100 °C during the first boiling time and decreases from about 100 °C to about 95-96 °C during the second boiling time.

10. Method according to any one of the claims from 1 to 9, wherein the cooling to ambient temperature is carried out by pouring the cooking mass into a recipient with a bottom surface greater than the boiling recipient and wherein the first cooling time is about 1 minute and/or until a temperature of the rice mass of between 75 °C and 80 °C, preferably about 77 °C, is reached.

11. Method according to any of the claims from 1 to 10, wherein the second cooling of the partially cooked rice mass is conducted in a blast chiller set at a temperature of between -17 °C and -20 °C and wherein the second cooling time is about 9 minutes and wherein after 4-5 minutes of cooling the mass of rice is preferably mixed.

12. Method according to any one of the claims from 1 to 11, wherein the step d) of pasteurisation is carried out at a temperature of approximately 75 °C for a time between 10 and 30 seconds.

13. Method according to any one of the claims from 1 to 12, wherein the partially cooked rice is packed in vacuum packs.

14. A method for final cooking partially cooked rice for making risottos or rice for salads or other uses, comprising cooking the partially cooked rice according to any of the claims from 1 to 13 in a cooking liquid, in a weight ratio 1:1 compared to the weight of rice, for a time between 2 and 4 minutes or about 3 minutes.

15. Method according to claim 14, wherein the final cooking of the rice is performed with induction systems.
